# EUROPÄISCHE PATENTSCHRIFT

(11) **EP 2 138 773 B1**
(45) Veröffentlichungstag und Bekanntmachung des Hinweises auf die Patenterteilung: **04.03.2015**
(21) Anmeldenummer: 09006202.7
(22) Anmeldetag: 07.05.2009
(51) Int. Cl.: F24D 11/00, F24D 19/10

(54) **Solarregelung für eine Solaranlage**
Solar regulation for a solar assembly
Réglage solaire pour une installation solaire

(30) Priorität: 23.06.2008 AT 10022008
(43) Veröffentlichungstag der Anmeldung: 30.12.2009
(73) Patentinhaber: Logotherm Regelsysteme GmbH, 3261 Steinakirchen (AT)
(72) Erfinder: Atzenhofer, Werner, 3251 Purgstall an der Erlauf (AT); Mandl, Klaus, 3261 Steinakirchen (AT); Dorrer, Herbert, Ing., 3251 Purgstall an der Erlauf (AT)
(74) Vertreter: Puchberger, Peter

(56) Entgegenhaltungen:
- DE-A1- 3 835 012
- DE-A1- 19 707 164
- DE-A1- 19 834 742
- FR-A1- 2 463 371

## Beschreibung

Die Erfindung betrifft ein Verfahren zur Regelung einer Solaranlage, die im Kollektorkreislauf zumindest einen Solarkollektor, einen Kaltwasserzulauf und einen Warmwasserablauf, einen Solarvorlauffühler und einen Solarrücklauffühler, der die Kollektortemperatur misst, sowie zumindest eine Solarladepumpe, zumindest einen Pufferspeicher und einen Wärmespeicher, oder einen Pufferspeicher mit Warmwasserzone, umfasst, wobei am Kollektor ein Kollektorfühler zur Ermittlung der Kollektortemperatur, und im Kollektorkreislauf ein Durchflussgeber und ein Solarertragsrechenwerk zur Berechnung der Solarleistung vorgesehen sind, wobei bei dem Verfahren die Solarladepumpe eingeschaltet bleibt, solange die Solarleistung einen Leistungsschwellenwert übersteigt.

Herkömmliche Solarregelungen arbeiten üblicherweise mit einer Temperaturdifferenzregelung.

Dabei wird die Temperatur des aus dem Solarkollektor strömenden aufgeheizten Strömungsmediums mit dem aus dem Solarwärmetauscher rückströmenden Strömungsmediums verglichen. Ein Problem liegt darin, dass die Temperaturerfassung des Strömungsmediums zumeist ungenau ist. Zum Einen wird durch die Temperaturfühler nicht die tatsächliche Austrittstemperatur des Strömungsmediums gemessen, sondern eine Kombination zwischen Mediumstemperatur und Chassistemperatur. Bei üblichen Solaranlagen kann zB die Austrittstemperatur des Strömungsmediums um 2K höher sein als die durch die üblichen Kollektorfühler in Tauchhülsen gemessene Temperatur. Zum Anderen erfolgen immer nur punktuelle Temperaturmessungen, wobei das Messergebnis stark von der räumlichen Anordnung der Messfühler abhängt. Dies führt zu dem Nachteil, dass die Solarladepumpe entweder zu früh oder zu spät eingeschaltet wird. Das frühzeitige Einschalten bewirkt einen Wärmerücktransport vom Solarspeicher zum Solarkollektor und das zu späte Einschalten bewirkt eine Reduzierung des Nutzungsgrades.

Durch aufwendigere Messmethoden und Messapparaturen ist es möglich, diese Nachteile zu vermeiden. Allerdings erhöht ein größerer Steuerungsaufwand die Kosten der Herstellung, der Montage, der Wartung und etwaiger Reparaturen. Aufgabe der vorliegenden Erfindung ist es, die genannten Nachteile zu vermeiden und eine gute Solarregelung mit möglichst niedrigem Aufwand vorzusehen. Dabei sollen auch alle sich mit der Zeit verändernden Parameter wie Wärmetauscher, Verkalkung, Verschmutzung und dergleichen berücksichtigt werden.

In der Praxis reicht eine Solaranlage alleine meist nicht aus, um das ganze Jahr über ausreichend Wärme bereitzustellen. Aus diesem Grund werden Zusatzheizungen in das System integriert. Diese können die benötigte Wärme beispielsweise elektrisch oder durch Verbrennungsöfen erzeugen. Dabei ist es aus Gründen des Umweltschutzes in manchen Gegenden gewünscht, Holzheizungen zu verwenden.

Um den Wirkungsgrad einer zusatzbeheizten Solaranlage zu erhöhen, wird, wie in der DE 20 2006 003 334 U1 beschrieben ist, ein Pufferspeicher verwendet. Dieser ist parallel zum Warmwasserspeicher über einen Wärmetauscher an den Solarkreislauf angeschlossen und mit einem Wärmespeichermedium, zum Beispiel Wasser, gefüllt. Der Pufferspeicher ist, dem Stand der Technik entsprechend, mit einer Zusatzheizung beheizbar und dient dem Ausgleich von Ertragsschwankungen des Kollektors. Weiters kommt es durch Bereitstellung des optimal temperierten Arbeitsmediums zu einer Wirkungsgradverbesserung des Gesamtsystems.

Die im Pufferspeicher zu speichernde Energie ist von mehreren Parametern/Faktoren abhängig.

Ein Einflussfaktor ist die Sonnenaktivität. Wird in das System mehr Wärme eingebracht als verbraucht wird, kann Solarwärme im Pufferspeicher gespeichert werden. Wird mehr Energie verbraucht als vom Solarkollektor eingebracht wird, kann die Pufferenergie dem Pufferspeicher in Form von Wärme entnommen werden.

Daraus ergibt sich ein weiterer Parameter, der Wärmebedarf des Verbrauchers. Die Verbraucher, also im Falle einer Hausheizanlage die Heizung und das Warmwassersystem, weisen starke Bedarfsschwankungen auf. So ist beispielsweise in der Nacht der Warmwasserverbrauch gleich null, steigt aber am Morgen sprunghaft an. Ein weiteres Beispiel sind die Sommer/Winterschwankungen des Heizwärmebedarfs.

Auch die Zusatzheizung ist ein wichtiger Einflussfaktor auf die benötigte Pufferwärmemenge. Zu unterscheiden sind stetig beheizbare Wärmeerzeuger, wie Öl-, Gas- und Elektroheizungen und Heizungen mit chargenweise eingebrachtem Brennstoff, wie beispielsweise Holzkessel.

Ist die Zusatzheizung als Verbrennungseinrichtung ausgeführt, so hängt die erzeugte Wärmemenge primär von der Menge und dem Brennwert des zugeführten Brennstoffes sowie vom Wirkungsgrad des Kessels ab. Bei Öl- oder Gasbrennern sowie bei Pellets- und Hackschnitzelverbrennungseinrichtungen ist der Brennstoffmassenstrom sehr leicht zu regulieren. Bei Holzkesseln muss der Brennstoff chargenweise eingebracht werden. Ist die in den Brennraum eingebrachte Brennstoffmenge zu gering, steigt der Bedienungsaufwand durch ständiges Nachlegen. Ist sie zu groß, so erzeugt der Holzkessel zu viel Energie und muss gedrosselt werden um ein Heißlaufen der Anlage zu verhindern. Dies führt zu erhöhten Abgasemissionen bzw. zum Stillstand und verringert den Solarertrag.

Die Nachlegemenge und der Nachlegezeitpunkt werden bei herkömmlichen Holzkesseln nach Schätzungen der Witterungslage, dem aktuellen Wärmebedarf, der Pufferrestladung und des Solarertrages abgeschätzt.

Um den Wirkungsgrad eines Holzkessels zu erhöhen und den Bedienungsaufwand zu senken, ist es notwendig, lange Brenndauerintervalle vorzusehen. Die überschüssige Wärme solch langer Brennzeiten wird ebenfalls im Pufferspeicher gespeichert.

Bei langanhaltender, starker Sonneneinstrahlung kann es dazu führen, dass zuviel Wärmeenergie im System vorhanden ist. Bei Kollektortemperaturen über beispielsweise 125°C kann es zu Dampfblasenbildung, und in weiterer Folge zur Beschädigung von Systemelementen wie Pumpen oder Wärmetauscher kommen.

Daher wird ab einer einstellbaren Kollektortemperatur die Pumpe zwischen einer Temperaturdifferenz getaktet. Der so reduzierte Wirkungsgrad und die damit verbundene reduzierte Kollektorleistung kann vom Speicher in der Regel aufgenommen werden und der Kollektor sowie die übrigen Systemelemente werden zuverlässig vor Übertemperatur geschützt.

Weiters ist aus dem Dokument DE 19 834 742 eine Solarregelung für eine Solaranlage bekannt, die im Kollektorkreislauf einen Solarkollektor, einen Kaltwasserzulauf und einen Warmwasserablauf sowie einen Solarvorlauffühler und einen Solarrücklauffühler aufweist, sowie eine Solarladepumpe und einen Warmwasserspeicher umfasst, wobei ein Kollektorfühler zur Ermittlung der Kollektortemperatur und ein Durchflussgeber sowie ein Solarertragsrechenwerk zur Berechnung der Solarleistung vorgesehen sind, und die Solarladepumpe eingeschaltet bleibt, solange die Solarleistung einen Leistungsschwellenwert übersteigt.

Es ist somit Aufgabe der Erfindung, eine Solarregelung und auch eine Regelung eines Solarkreises mit Pufferspeicher und Kesselheizkreis vorzusehen, die bei kostengünstigerem Aufbau eine optimale Energienutzung liefert und bedienungsfreundlich ist.

Diese Aufgabe wird erfindungsgemäß dadurch gelöst, dass die Solarladepumpe ausgeschaltet wird, wenn der Leistungsschwellenwert unterschritten wird, wobei die Kollektortemperatur als Sollwert abgespeichert wird, und die Solarladepumpe wieder eingeschaltet wird, wenn die Kollektortemperatur über einen Anstiegsschwellenwert über den Sollwert ansteigt.

Weitere Merkmale sind den Ansprüchen und der nachfolgenden Beschreibung und der Zeichnung zu entnehmen.

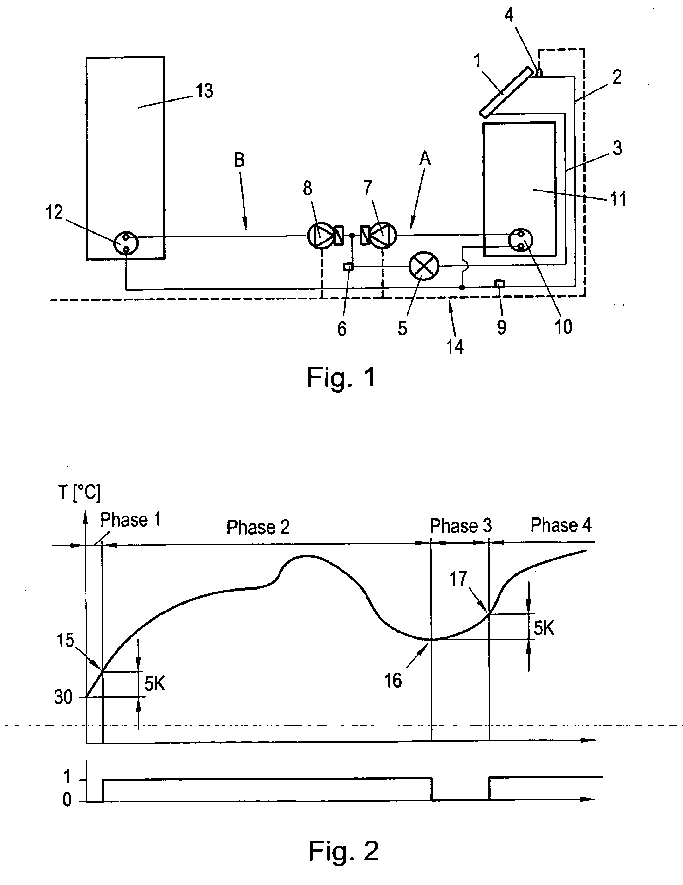

Die Erfindung wird nun anhand der Figuren 1 bis 4 beispielsweise näher erläutert.

In den Fig. 1 und 2 ist ein Ausführungsbeispiel der vorliegenden Erfindung als Teil einer Warmwasser-Solaranlage schematisch dargestellt. Fig. 1 zeigt eine einfache Ausführung der erfindungsgemäßen Solarregelung und Fig. 2 zeigt im Diagramm einzelne Betriebsphasen der Solarregelung.

Gemäß Fig. 1 verfügt der Solarkollektor über einen Warmwasserablauf 2 und einen Kaltwasserzulauf 3. Im Warmwasserablauf 2 sitzt unmittelbar nach dem Solarkollektor 1 bzw. am Kollektorchassis der Kollektorfühler 4. Im Kaltwasserzulauf 3 sitzt ein Durchflussgeber 5 und der Solarrücklauffühler 6. Die Solarladepumpe 7 bedient den ersten Solarkreis A und die Solarladepumpe 8 bedient einen zweiten Solarkreis B.

Im Warmwasserablauf 2 ist der Solarvorlauffühler 9 angeordnet und der Warmwasserablauf 2 verzweigt sich bei der Verzweigung 14 einmal zum Wärmetauscher 10 im Warmwasserspeicher 11 des Solarkreises A und/oder zum Wärmetauscher 12 im Pufferspeicher 13 des Solarkreises B.

Die Solarladepumpen 7, 8 werden über ein Solarertragsrechenwerk geregelt. Für das Solarertragsrechenwerk werden die Messdaten des Solarvorlauffühlers 9, des Solarrücklauffühlers 6 und des Durchflussgebers 5 herangezogen. Mit diesen Messdaten kann die aktuell übertragene Wärmeleistung der Anlage zu jeder Zeit errechnet werden. Dadurch sind alle sich mit der Zeit veränderlichen Parameter, wie oben gesagt, mitberücksichtigt. Somit kann sich die Solarregelung der jeweils aktuellen Situation der Solaranlage anpassen. Die Leistungsberechnung an sich ist dem Fachmann wohlbekannt.

Die Solarladepumpe 7 des ersten Solarkreises A hat Priorität gegenüber der Solarladepumpe 8 des zweiten Solarkreises B. Der Pufferspeicher 13 kann ein Feststoff-, Erd- oder Wasserwärmespeicher sein. Wenn hier von Wasser als Strömungsmedium die Rede ist, umfasst dies auch alle anderen flüssigen Medien wie Wasser-Alkoholgemische, Glykol, Öle und dergleichen.

Anhand der Fig. 2 werden die Schaltphasen im ersten Solarkreis A beschrieben. Das Diagramm zeigt im oberen Teil die gemessene Kollektortemperatur beim Kollektorfühler 4 in Abhängigkeit von der Zeit. Der untere Teil der Fig. 2 zeigt den Pumpenzustand der Solarpumpe 7, wobei mit Null die Pumpe ausgeschaltet und mit Eins die Pumpe eingeschaltet ist.

### Phase 1:

Wenn die Solarladepumpe ausgeschaltet ist, wird die tiefste Kollektortemperatur abgespeichert. Diese Temperatur ist dann die Kollektorsolltemperatur. Das untere Limit der abgespeicherten Kollektortemperatur beträgt als Minimaltemperaturschwellenwert 30°C. Steigt die Kollektortemperatur über die gespeicherte minimale Kollektortemperatur (Kollektorsolltemperatur) um den Anstiegsschwellenwert +5K, wird die Solarladepumpe bei 15 eingeschaltet.

### Phase 2:

Wenn die aktuell gemessene Solarleistung über einem bestimmten Wert bleibt, so bleibt die Solarladepumpe eingeschaltet, bis sie unter einen bestimmten Leistungsschwellenwert sinkt.

### Phase 3:

Sinkt die aktuell aus den Messwerten berechnete Solarleistung unter einen bestimmten Wert, so wird die Solarladepumpe bei 16 ausgeschaltet. Die aktuelle Kollektortemperatur wird abgespeichert und bildet die neue Kollektorsolltemperatur. Erst wenn die aktuelle Kollektortemperatur über die zuletzt abgespeicherte Kollektorsolltemperatur um +5K steigt, wird die Solarladepumpe bei 17 wieder eingeschaltet.

### Phase 4:

Bleibt die aktuell gemessene Solarleistung über einem bestimmten Wert, bleibt die Solarladepumpe eingeschaltet und die Phase 4 geht in die Phase 2 über.

Generell bleibt die Solarpumpe solange eingeschaltet, bis die aktuell berechnete Solarleistung unter einen bestimmten Wert fällt. Ein Wiedereinschalten der Solarladepumpe erfolgt nur dann, wenn die aktuelle Kollektortemperatur einen Anstiegsschwellenwert über einem Temperatursollwert übersteigt, wobei der Temperatursollwert die vorangegangene minimale Kollektortemperatur ist.

Bei einer Zwei-Kreis-Solarregelung wird für jeden Solarkreis eine eigene Kollektorsollwerttemperatur für das Einschalten der Solarladepumpe gespeichert, um beim Rückschalten (vom Solarkreis B auf Solarkreis A) sofort optimale Funktion zu erreichen. Die Solarladepumpe 7 des ersten Solarkreises hat Priorität vor der Solarladepumpe 8 des zweiten Solarkreises. Wenn der Warmwasserspeicher 11 eine Solltemperatur erreicht hat, schaltet die Solarpumpe 8 ein und die Wärme des Solarkollektors gelangt in den Pufferspeicher 13.

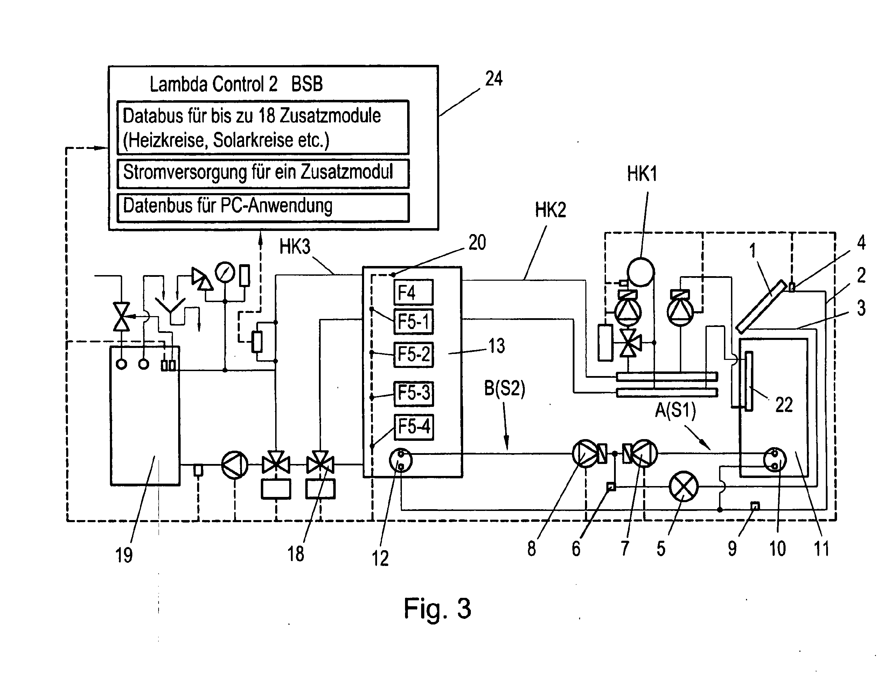

Fig. 3 zeigt eine Heizanlage mit einem Solarkollektor 1, dessen Wärme über einen Wärmetauscher 10 an den Warmwasserspeicher 11 abgegeben werden kann. Diese Elemente sind mit der Solarpumpe 7, dem Durchflussgeber 5, dem Solarvorlauffühler 9 und dem, dem Kollektor nachgeschalteten Kollektorfühler 4 in Serie geschalten, und bilden zusammen den Solarkreis A. Dieser Solarkreis ist aktiv, wenn die Solarwärme in den Warmwasserspeicher eingespeist wird.

Überschüssige Wärme wird im Solarkreis B an den Pufferspeicher 13 abgegeben. Dieser Solarkreis B ist parallel an den Solarkreis A angeschlossen und umfasst zusätzlich die Solarpumpe 8 und den Wärmetauscher 12 im Pufferspeicher 13. Insoweit entspricht die Anlage jener der Fig. 1. Der Pufferspeicher weist eine Reihe von Temperaturfühlern F4, F5-1 bis F5-4 auf, die den Temperaturverlauf im Inneren des Pufferspeichers 13 messen.

Zur zusätzlichen Wärmezufuhr ist ein Holzheizkessel 19 vorgesehen. Dieser wird händisch mit Holzstücken befüllt. Die erforderliche Menge des Brennstoffes wird mittels einer Brennstoffmengen-Berechnungseinheit durchgeführt und kann über ein Display angezeigt werden. Diese Anzeige kann beispielsweise lauten: "Füllen Sie den Brennraum zu 70% mit Fichtenholz", oder: "Führen Sie 35kg Holzbriketts zu".

Ein weiterer mit dem Pufferspeicher 13 verbundener Heizkreis ist als Verbraucher das Hausheizwerk HK1. Es umfasst üblicherweise einen Heizwasserkreislauf mit einer Anzahl von Konvektionsflächen wie Heizkörpern, Wand- oder Fußbodenheizungen. Zusätzlich befindet sich in diesem Kreislauf ein Wärmetauscher 22, der sich im Warmwasserspeicher 11 befindet. Dieser dient dazu, die gespeicherte Wärme vom Pufferspeicher 13 auf das Warmwasser zu übertragen. Benötigt wird dieser Prozess beispielsweise, wenn der Solarertrag über längere Zeit zu gering ist, um den Warmwasserspeicher 11 auf Temperatur zu halten. In diesem Fall wird über diesen Wärmetauscher 22 Wärme aus dem Pufferspeicher entnommen. Ist auch die Wärme des Pufferspeichers 13 erschöpft, so muss die zusätzliche Heizung, in diesem Fall der mit Holz beschickte Heizkessel 19, Wärme in das System einbringen. Diese gelangt dann über den Pufferspeicher 13 in den Heizkreislauf und weiter über den Wärmetauscher 22 in den Warmwasserspeicher.

Die Steuerung und/oder Regelung aller Systemkomponenten sowie die Verarbeitung der Messdaten von den Temperatur- und Durchflussmesssensoren erfolgt in einer zentralen Recheneinheit 24. Im Folgenden werden exemplarische Berechnungen dieser Einheit detailliert ausgeführt:

Ein wesentliches Merkmal der vorliegenden Erfindung liegt in der Kombination des Solarkreislaufs mit der Wärmeertragsberechnung und dem nachgeschalteten Holzkesselwärmekreislauf.

Gemäß Figur 3 misst beispielsweise in der Früh der Kollektorfühler 4 das Überschreiten des Schwellenwertes z.B. 30° + 5° Schwellenwert also 35°.
Dann beginnt die Pumpe 7 zu laufen und speichert die vom Sonnenkollektor abströmende Wärme in den Warmwasserspeicher 11. Wenn der Kollektor genügend Wärme abgibt (beispielsweise 300 Watt), dann bleibt die Pumpe 7 solange eingeschaltet, bis im Warmwasserspeicher 11 der Temperatursollwert erreicht ist. Erst dann wird die zweite Pumpe 8 eingeschaltet, sodass die vom Kollektor erzeugte Wärme über den Wärmetauscher 12 in den Pufferspeicher 13 übertragen wird.

Durch den Heizkreis HK3 wird vom Holzkessel 19, sofern er angestellt ist, ebenfalls Wärme in den Pufferspeicher 13 eingespeichert.

Im Pufferspeicher ist mit 12 der Wärmetauscher des Solarkreislaufs 2 eingezeichnet. Im Pufferspeicher 13 sind der Höhe nach gestaffelt mehrere Temperaturfühler F4, F5-1 bis F5-4 vorgesehen, um die Temperaturverteilung innerhalb des Speichers und damit die zur Verfügung stehende Gesamtwärmemenge des Pufferspeichers ermitteln zu können.

Vom Pufferspeicher 13 wird der Verbraucherheizkreis HK1 mit Wärme beschickt, wobei vom Pufferspeicher 13 Wärme auch an den Warmwasserspeicher 11 abgegeben werden kann, wenn der Sonnenkollektor 1 keine Wärme abgibt.

Eine kritische Frage ist, wann in einem solchen System der Verbrennungsvorgang des Holzkessels gestartet werden soll. Zur Berechnung des Zeitpunktes sind folgende Überlegungen und Berechnungen zu berücksichtigen.
- Die im Pufferspeicher 13 benötigte Wärmemenge wird unter Berücksichtigung folgender Einflussfaktoren berechnet:
   Die vorhandene Wärmemenge aus den Messungen der Temperaturfühler F4, F5-1 bis F5-4;
   Der Solarertrag, also die vom Sonnenkollektor zur Verfügung gestellte
   Wärmeenergie;
   Der Wärmeabtransport durch Wärmeverbraucher.

Der Holzkessel 19 wird gestartet, wenn der Solarertrag nicht groß genug ist, um das Wärmedefizit im Pufferspeicher 13 auszugleichen oder die Wärmemenge entsprechend anzuheben.

Für den Fall, dass der Pufferspeicher 13 auch von einer Öl- oder Elektroheizung beschickt werden kann, hängt die Steuerung der Beheizung des Pufferspeichers von der Solaraktivität ab. Die Solaraktivität wird bevorzugt ermittelt aus der durchschnittlichen Einschaltdauer der Solarpumpen pro Tag, gemittelt über einen Zeitraum von mehreren Tagen, beispielsweise von 7 Tagen.

Wenn die durchschnittliche Einsschaltdauer der/des Solarkreise(s) beispielsweise größer als 2 Stunden/pro Tag ist, dann wird eine genügend große Solaraktivität angenommen. In diesem Fall heizt die genannte Zusatzheizung nur auf die eingestellte Minimaltemperatur plus 2K. In der Praxis kann dies so aussehen, dass beispielsweise am Morgen genug Wärme zum Waschen und Duschen im Pufferspeicher vorhanden ist, dass aber dann anstatt der Zusatzheizung die Solaranlage für die weitere Aufheizung zur Verfügung steht und somit der maximale Solarertrag ermöglicht wird und der Energieverbrauch der Zusatzheizung möglichst gering gehalten wird.

Hinsichtlich des Holzkessels ist zu beachten, dass er vorteilhaft möglichst lange Brandzeiten haben soll, um die Verluste des Anfeuerns zu minimieren.

Wenn gemäß Erfindung eine Wärmeertragsrechnung angestellt wird, kann die Steuerung beispielsweise wie folgt durchgeführt werden:

Es wird der Wärmeertrag des Solarkreises über 7 Tage, also einen längeren Zeitraum, gemessen und gemittelt. Übersteigt der durchschnittliche Tageswärmeertrag ein bestimmtes Maß, werden davon 125% als dynamische Pufferreserve hinzugezählt und dieser Wert wird für die Brennstoffberechnung berücksichtigt.

Für die zusätzliche Heizung durch den Heizkessel wird der im Pufferspeicher 13 total benötigte Wärmebedarf ermittelt und davon wird die vom Solarkreis bereitgestellte Wärmemenge abgezogen. Diese Differenz ergibt die Wärmemenge, die von der Heizleistung des Holzkessels zur Verfügung gestellt werden muss. Daraus errechnet sich folglich der Holzbedarf.

Um den Holzkessel überhaupt starten zu können, muss der Pufferspeicher fähig sein, eine gewisse Wärmemenge aufzunehmen, anderenfalls kann der Holzkessel seine Wärme nicht abgeben, die er schon beim Aufheizen bis zur Betriebstemperatur abgeben muss. Zum Erreichen der optimalen Betriebsbedingungen benötigt der Holzkessel immerhin 1 bis 1 ½ Stunden.

Für den gesamten Wärmehaushalt ist auch wichtig, wie das Wärmeverhalten des Gebäudes aussieht. Das Heizsystem berücksichtigt sehr viele Variablen der gesamten Heizanordnung. Die Speicherkapazität des Pufferspeichers 13 bestimmt die Wärmemenge, die für den Verbrauch zur Verfügung gestellt werden kann. Je größer der Speicher, umso höher der Komfort bei der Bedienung des Holzkessels. Eine weitere Variable ist der Sonnenkollektor, der je nach Größe und Lage Wärmemenge in den Pufferspeicher einspeichert. Zusätzlich kommt die aktuelle Gebäudeheizlast in Verbindung mit Außen- und Innentemperatur, Sonneneintrag etc. Aus alldem ergibt sich die Holzmenge, die der Heizkessel mit seinem Wirkungsgrad verbrennen muss, um die fehlende Wärme zu erzeugen. Weiters sind noch verschiedene Holzarten zu berücksichtigen. Z.B. kann das Steuerungssystem an dem Benutzer die Aufforderung stellen, den Kessel beispielhaft zu 70% mit Fichtenholz oder 35 kg Holzbriketts zu befüllen.

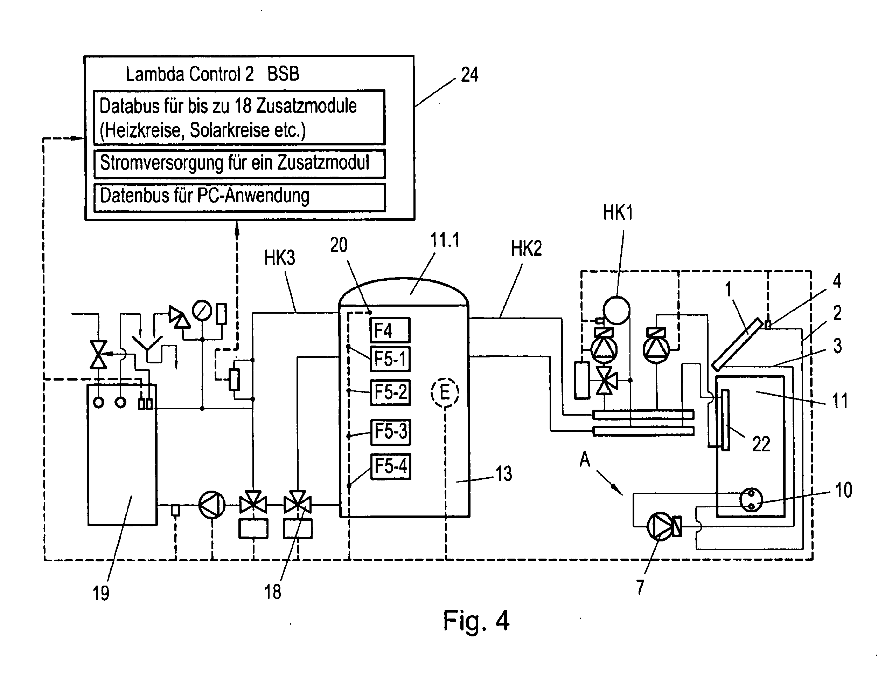

Fig. 4 ist nach den Erläuterungen zur Fig. 3 von selbst verständlich. Die dargestellte Anlage enthält nur einen Solarkreis A, der seine Wärme an den Warmwasserspeicher 11 abgibt. Über dessen Wärmetauscher 22 wird die überschüssige Wärme an den Speicherheizkreis HK2 und durch diesen an den Pufferspeicher 13 übertragen. Bei Bedarf fließt der Wärmestrom auch in die entgegengesetzte Richtung vom Pufferspeicher zum Warmwasserspeicher.

Der Wärmetauscher 10 im Warmwasserspeicher und der Wärmetauscher 12 im Pufferspeicher sind nur beispielhaft dargestellt, Alle innen- und außenliegenden Varianten sind möglich.
Es besteht auch die Möglichkeit den bevorrangten Solarkreis A (S1) im oberen Bereich des Pufferspeichers zu platzieren um rasch brauchbare Temperaturen im Puffer zu produzieren.
Der Wärmetauscher 10 kann auch durch eine im oberen Höhenbereich des Pufferspeichers 13 angeordnete, nur für Warmwasserbereitung reservierte Zone 11.1 realisiert werden. In dieser Zone befindet sich ein Warmwasserspeicher oder über eine Pumpe wird nach Bedarf Wärme aus dieser Zone entnommen und über einen externer Wärmetauscher wird im Durchlaufprinzip Frischwasser erwärmt.
- 1: Solarkollektor
- 2: Warmwasserablauf
- 3: Kaltwasserzulauf
- 4: Kollektorfühler
- 5: Durchflussgeber
- 6: Solarrücklauffühler
- 7: Solarpumpe Kreis A (S1)
- 8: Solarpumpe Kreis B (S2)
- 9: Solarvorlauffühler
- 10: Wärmetauscher (im Warmwasserspeicher oder in der Warmwasserzone des Pufferspeichers)
- 11: Warmwasserspeicher
- 11.1: Warmwasserzone
- 12: Wärmetauscher Pufferspeicher
- 13: Pufferspeicher
- 14: Verzweigung
- 15: Arbeitspunkt
- 16: Arbeitspunkt
- 17: Arbeitspunkt
- 18: Ladeventil (Y2; 3 Punkt geregelt)
- 19: Heizkessel
- 20: Pufferfühler
- 21: BSB Fühler (F5-1 bis F5-4)
- 22: Wärmetauscher (Warmwasser)
- 23: leer
- 24: Recheneinheit
- A: erster Solarkreis A
- B: zweiter Solarkreis B
- HK1: Heizkreis Hausheizung
- HK3: Holzkessel-Heizkreis
- HK2: Pufferspeicherheizkreis

## Patentansprüche

1. Verfahren zur Regelung einer Solaranlage, die im Kollektorkreislauf zumindest einen Solarkollektor (1), einen Kaltwasserzulauf (3) und einen Warmwasserablauf (2), einen Solarvorlauffühler (9) und einen Solarrücklauffühler (6), sowie zumindest eine Solarladepumpe (7, 8), zumindest einen Pufferspeicher (13) und einen Warmwasserspeicher (11), oder einen Pufferspeicher mit Warmwasserzone umfasst, wobei am zumindest einen Solarkollektor (1) ein Kollektorfühler (4) zur Ermittlung der Kollektortemperatur, und im Kollektorkreislauf ein Durchflussgeber (5) und ein Solarertragsrechenwerk zur Berechnung der Solarleistung vorgesehen sind, wobei die Solarladepumpe (7,8) eingeschaltet bleibt, solange die Solarleistung einen Leistungsschwellenwert übersteigt,
wobei
- die zumindest eine Solarladepumpe (7, 8) ausgeschaltet wird, wenn der Leistungsschwellenwert unterschritten wird, wobei die Kollektortemperatur als Sollwert abgespeichert wird, und
- die zumindest eine Solarladepumpe (7, 8) wieder eingeschaltet wird, wenn die Kollektortemperatur über einen Anstiegsschwellenwert über den Sollwert ansteigt.

2. Verfahren nach Anspruch 1, **dadurch gekennzeichnet, dass** für das Einschalten der zumindest einen Solarladepumpe (7, 8) ein Minimaltemperaturschwellenwert vorgesehen ist.

3. Verfahren nach Anspruch 1 oder 2, **dadurch gekennzeichnet, dass** die Anstiegsschwellenwerte der Temperatur etwa 5K betragen.

4. Verfahren nach einem der Ansprüche 1 bis 3, **dadurch gekennzeichnet, dass** der Leistungsschwellenwert zwischen 200 und 400 Watt, bevorzugt bei 300 Watt liegt.

## Claims

1. A method for controlling a solar installation, which, in the collector circuit, comprises at least one solar collector (1), a cold water intake (3) and a hot water outflow (2), a solar flow sensor (9) and a solar return flow sensor (6), and also at least one solar charging pump (7, 8), at least one storage tank (13) and a hot water tank (11), or a storage tank with a hot water zone, wherein at least one solar collector (1) and a collector sensor (4) for detecting the collector temperature are provided and, in the collector circuit, a flow transmitter (5) and a solar yield arithmetic logic unit for calculating the solar capacity are provided, wherein the solar charging pump (7, 8) remains switched on as long as the solar capacity exceeds a threshold capacity value,
wherein
- the at least one solar charging pump (7, 8) is switched off if the capacity falls below the threshold capacity value, wherein the collector temperature is saved as a set value, and
- the at least one solar charging pump (7, 8) is switched on again, if the collector temperature increases above a threshold increase value above the set value.

2. The method according to claim 1, **characterised in that** a minimum temperature threshold value is provided for switching on the at least one solar charging pump (7, 8).

3. The method according to claim 1 or 2, **characterised in that** the threshold increase values of the temperature are approximately 5K.

4. The method according to one of claims 1 to 3, **characterised in that** the threshold capacity value lies between 200 and 400 watts, preferably at 300 watts.

## Revendications

1. Procédé pour le réglage d'une installation solaire, laquelle comprend, dans le circuit du collecteur, au moins un collecteur solaire (1), une entrée d'eau froide (3) et une sortie d'eau chaude (2), une sonde solaire de départ (9) et une sonde solaire de retour (6) ainsi qu'au moins une pompe de charge solaire (7, 8), au moins un réservoir tampon (13) et un réservoir d'eau chaude (11), ou un réservoir tampon avec une zone d'eau chaude, dans lequel on prévoit, sur au moins un capteur solaire (1), une sonde de collecteur (4) pour déterminer la température du collecteur, et dans le circuit du collecteur, un débitmètre (5) et une unité de calcul du rendement solaire pour le calcul de la puissance solaire, la pompe de charge solaire (7, 8) restant en marche tant que la puissance solaire dépasse une valeur de seuil de puissance
dans lequel
- l'au moins une pompe de charge solaire (7, 8) est arrêtée lorsque la valeur de seuil de puissance est dépassée par le bas, la température du collecteur étant enregistrée en tant que valeur de consigne, et
- l'au moins une pompe de charge solaire (7, 8) étant de nouveau mise en marche lorsque la température du collecteur s'élève au-dessus d'une valeur de seuil de hausse dépassant la valeur de consigne.

2. Procédé selon la revendication 1, **caractérisé en ce que**, pour la mise en marche de l'au moins une
pompe de charge solaire (7, 8), on prévoit une valeur de seuil de température minimale.

3. Procédé selon la revendication 1 ou 2, **caractérisé en ce que** les valeurs de seuil de hausse de la température sont de l'ordre de 5 K.

4. Procédé selon l'une des revendications 1 à 3, **caractérisé en ce que** la valeur de seuil de puissance est comprise entre 200 et 400 watts, en étant de préférence de l'ordre de 300 watts.
